# FASCICULE DE BREVET EUROPEEN

(11) **EP 2 384 452 B1**
(45) Date de publication et mention de la délivrance du brevet: **30.11.2016**
(21) Numéro de dépôt: 10701531.5
(22) Date de dépôt: 28.01.2010
(51) Int. Cl.: G02B 6/44, H01B 17/00

(54) **PROTECTION DE FIBRES OPTIQUES POUR ISOLATEURS ELECTRIQUES**
SCHUTZ FÜR GLASFASERN IN ELEKTRISCHEN ISOLATOREN
PROTECTION FOR OPTICAL FIBER IN AN ELECTRICAL INSULATOR

(30) Priorité: 30.01.2009 FR 0950596
(43) Date de publication de la demande: 09.11.2011
(73) Titulaire: General Electric Technology GmbH, 5400 Baden (CH)
(72) Inventeur: KIEFFEL, Yannick, F-38440 Saint-Jean de Bournay (FR); MISTIAEN, Bernard, B-4051 Chaudfontaine (BE)
(74) Mandataire: Ilgart, Jean-Christophe
(86) Numéro de dépôt international: PCT/EP2010/050978
(87) Numéro de publication internationale: WO 2010/086355

(56) Documents cités:
- EP-A- 0 426 204
- EP-A- 0 433 565
- EP-A- 0 671 746
- EP-A1- 0 265 737
- JP-A- 59 038 702
- NL-A- 9 002 602
- US-A1- 2006 153 509
- US-B1- 6 265 039

## Description

### DOMAINE TECHNIQUE

La présente invention concerne, d'une manière générale, la protection de fibres optiques destinées à être utilisées dans des isolateurs électriques.

Elle se rapporte, en particulier, à un isolateur électrique qui est muni d'au moins un ensemble comprenant une fibre optique ou un faisceau de fibres optiques accolées les unes aux autres et un manchon permettant de protéger cette fibre ou ce faisceau de fibres, en particulier contre les attaques acides, ainsi qu'à un procédé de fabrication de cet ensemble.

L'invention est notamment susceptible d'être utilisée dans la réalisation de transformateurs de mesure non conventionnels, encore connus sous le sigle NCITs (pour « **N**on **C**onventional **I**nstrument **T**ransformers »), tels que ceux destinés à mesurer les courants et les tensions dans des réseaux électriques à haute tension, ou dans des traversées isolées utiles dans les transformateurs ou les disjoncteurs à isolation gazeuse (GIS, Dead Tank), ou encore dans des isolateurs de chambre ou support comme dans le cas des disjoncteurs conventionnels.

### ÉTAT DE LA TECHNIQUE ANTÉRIEURE

Dans le domaine de l'appareillage pour réseaux électriques à haute tension, de nombreuses applications sont basées sur l'utilisation de moyens optiques ou opto-électroniques qui permettent d'effectuer des mesures directement au potentiel de la haute tension. Il s'agit notamment de capteurs optiques qui mesurent la tension, le courant ou la température.

L'information recueillie par ces capteurs sous forme d'énergie lumineuse est véhiculée par des fibres optiques le long d'un isolateur qui joue à la fois le rôle de support mécanique et d'isolant électrique entre une phase et la terre ou entre différentes phases.

Les documents EP 265 737-A1 et EP 433 565-A2 décrivent des isolateurs électriques dans lesquels sont disposées des fibres optiques en hélice.

Généralement, ce type d'isolateur, dont un exemple est décrit dans la demande de brevet US publiée sous le n° 2006/0153509 [1], comprend un corps d'isolateur en un matériau composite qui est enveloppé dans un revêtement à ailettes en un matériau isolant, typiquement un caoutchouc silicone, et une ou plusieurs fibres optiques qui sont disposées en hélice autour du corps d'isolateur et qui sont donc noyées dans le revêtement isolant.

L'expérience montre que ces isolateurs sont le siège de défaillances qui vont de l'atténuation de l'intensité du signal lumineux transmis jusqu'à la rupture des fibres optiques.

Bien que les mécanismes responsables de ces défaillances ne soient pas totalement éclaircis, il semble qu'elles soient principalement dues à une dégradation du coeur en verre des fibres optiques consécutive à une attaque de ces fibres par de l'acide nitrique. Le processus de formation de cet acide est le suivant : les décharges couronnes se produisant dans l'air conduisent à la formation d'ozone ; les décharges couronnes se produisant en présence d'oxygène et d'azote conduisent, elles, à la formation d'oxydes d'azote (NOₓ) et, notamment, de dioxyde d'azote (NO₂), lequel conduit, à son tour, à la formation d'acide nitrique aqueux en présence d'eau.

Les réactions chimiques à la base de ce type de dégradation sont les suivantes .

### Réactions primaire

N₂ + O₂ + décharges couronnes → NOₓ

30₂ + décharges couronnes → 2O₃

Exemples de réactions secondaire

2NO₂ + H₂O → HNO₃(aq) + HNO₂(aq)

N₂O₅ + H₂O → 2HNO₃

NO + O₃ → NO₂ + O₂

HNO₂ + O₃ → HNO₃ + O₂.

L'acide nitrique peut se former à l'extérieur ou à l'intérieur de l'isolateur.

Dans le cas où il se forme à l'extérieur, il peut s'infiltrer dans le revêtement isolant en profitant d'un défaut ou d'une faiblesse de ce revêtement et migrer jusqu'au corps d'isolateur, attaquant sur son parcours la ou les fibres optiques présentes dans l'isolateur.

Dans le cas où il se forme à l'intérieur, les mécanismes chimiques sont identiques à ceux précédemment mentionnés mais le chemin menant à cette formation est différent. En effet, si des cavités sont présentes à l'interface entre la ou les fibres optiques et le revêtement isolant, ces cavités se chargent en humidité par perméation de la vapeur d'eau au travers de ce revêtement. Si ces cavités sont dans des zones de champs électriques forts et ont de faibles dimensions de l'ordre du millimètre, des décharges partielles peuvent être initiées (décharges couronnes) dans une atmosphère contenant de l'air (O₂ + N₂) et de l'humidité. Les mêmes réactions chimiques que celles montrées ci-avant sont alors initiées, conduisant à la formation d'acide nitrique à l'intérieur des cavités en contact avec la ou les fibres optiques.

L'humidité semble également jouer un rôle dans la survenue des défaillances. En effet, par un phénomène de perméation de la vapeur d'eau au travers du revêtement isolant, une certaine humidité peut régner à proximité de la surface externe du corps d'isolateur et venir dégrader la ou les fibres optiques qui entourent ce dernier.

Il est connu par la référence [1] précitée de protéger une fibre optique destinée à être utilisée dans un isolateur électrique en la plaçant dans un capillaire en verre de diamètre supérieur à celui de la fibre et de combler l'espace laissé entre la surface externe de la fibre et la surface interne du capillaire en verre en injectant dans le capillaire un milieu protecteur liquide du type huile ou alcool.

Toutefois, la protection qui est envisagée dans cette référence est une protection contre les contraintes thermomécaniques et l'utilisation d'un capillaire en verre est totalement inadaptée pour protéger une fibre optique contre les attaques acides.

Les Inventeurs se sont donc fixé pour but de trouver un moyen d'éviter qu'une fibre optique ou des fibres optiques présentes dans des isolateurs électriques ne soient l'objet d'attaques acides de manière à améliorer la fiabilité de ces isolateurs.

Ils se sont aussi fixé pour but que ce moyen permette, accessoirement, d'éviter également que ladite ou lesdites fibres optiques ne subissent les effets néfastes de la présence d'humidité au sein des isolateurs électriques.

Ils se sont encore fixé pour but que ce moyen soit applicable à tout type de fibre optique.

Ils se sont en outre fixé pour but que ce moyen soit simple à mettre en oeuvre et n'alourdisse pas les procédés par lesquels sont actuellement fabriqués les isolateurs à fibre (s) optique (s) tant en ce qui concerne le nombre d'opérations devant être effectuées dans le cadre de cette fabrication que sur le plan pécuniaire.

### EXPOSÉ DE L'INVENTION

Ces buts et d'autres encore sont atteints par l'invention qui propose, en premier lieu, un isolateur électrique qui comprend :
- un corps d'isolateur comportant une surface externe ;
- un revêtement en un matériau isolant qui recouvre la surface externe du corps d'isolateur ; et
- au moins un ensemble qui chemine le long du corps d'isolateur en étant noyé dans le revêtement en matériau isolant, qui comprend une fibre optique ou un faisceau de fibres optiques accolées les unes aux autres, et un manchon dans lequel est logé cette fibre ou ce faisceau de fibres (et qui sera donc appelé plus simplement, dans ce qui suit, « *ensemble fibre(s)* / *manchon »),* et dans lequel :
   - le manchon comprend au moins une couche en un matériau (co)polymère présentant une résistance aux acides telle que la perte de masse de ce matériau est inférieure à 0,1% lorsqu'il est soumis à un test de résistance à l'acide nitrique 1 M dans les conditions de la norme ASTM D 543-87 (intitulée *« Standard Test Method for Résistance of Plastics to Chemical Reagents* »), et
   - la surface interne du manchon épouse la surface externe de ladite fibre ou dudit faisceau de fibres.

Une fibre optique comprend typiquement trois composants, à savoir :
- un coeur en silice, en quartz fondu ou en plastique, dans lequel se propagent des ondes optiques ;
- une gaine optique ou « *cladding »* qui confine les ondes optiques dans le coeur; et
- un revêtement de protection ou « *coating* » qui assure la protection mécanique de la fibre.

Aussi, dans ce qui précède et ce qui suit, on entend par « *fibre optique* », un élément comprenant au moins ces trois composants.

Selon une première disposition préférée de l'invention, le matériau (co)polymère résistant aux acides est également résistant à la perméation des liquides et des gaz, cette résistance à la perméation étant telle que le temps nécessaire à de l'acide nitrique 1 M pour atteindre dans ce matériau une vitesse de perméation de 0,1 µg/min/cm² dans les conditions définies par la norme ASTM F 379-99a (intitulée « *Standard Test Method for Résistance of Protective Clothing Materials to Permeation by Liquids or Gases Under Conditions of Continuous Contact* ») est supérieur à 480 minutes.

Le matériau (co)polymère résistant aux acides et, accessoirement, à la perméation des gaz peut notamment être choisi parmi les polyoléfines (réticulées ou non), les polyisobutylènes et les (co)polymères fluorés thermoplastiques ou élastomères (modifiés ou non) tels que les polytétrafluoro-éthylènes. (PTFE) comme ceux commercialisés par la société DUPONT sous la dénomination Teflon^{®}, les fluorures de polyvinylidène (PVDF) comme ceux commercialisés par la société ARKEMA sous la dénomination Kynar^{®}, et les copolymères d'éthylène et de propylène fluorés (encore connus sous le nom d'éthylène-propylènes fluorés ou FEP) comme ceux commercialisés par la société DUPONT sous la dénomination Teflon^{®} FEP.

Parmi ceux-ci, les (co)polymères fluorés thermoplastiques sont particulièrement préférés.

Selon une autre disposition préférée de l'invention, le manchon présente une épaisseur de 0,1 à 1,2 mm, avantageusement de 0,5 à 1 mm et, mieux encore, de 0,6 à 0,8 mm.

Par ailleurs, ce manchon comprend avantageusement deux couches solidaires l'une de l'autre, une couche externe qui est constituée par le matériau (co)polymère résistant aux acides et, accessoirement, à la perméation des gaz et des liquides, et une couche interne qui forme un joint adhésif entre ladite couche externe et la fibre optique ou le faisceau de fibres optiques.

Conformément à l'invention, on préfère que cette couche interne forme de plus un joint résistant à la perméation des liquides et des gaz, cette résistance à la perméation étant définie de la même façon que pour la couche externe du manchon, c'est-à-dire par le temps que met de l'acide nitrique 1 M pour atteindre dans le matériau formant ladite couche une vitesse de perméation de 0,1 µg/min/cm² dans les conditions définies par la norme ASTM F 379-99a, lequel doit être supérieur à 480 minutes.

De préférence, la couche interne du manchon est en une polyoléfine ou en un (co)polymère fluoré thermoplastique, avantageusement un copolymère d'éthylène et de propylène fluoré comme ceux commercialisés par la société DUPONT sous la dénomination Teflon^{®} FEP.

Un manchon particulièrement préféré est un manchon dont la couche externe est en un polytétrafluoroéthylène et dont la couche interne du manchon est en un copolymère d'éthylène et de propylène fluoré.

Comme précédemment indiqué, l'ensemble fibre(s)/manchon peut comprendre 1 seule fibre optique ou un faisceau de plusieurs fibres optiques accolées-les unes aux autres, auquel cas le nombre de fibres optiques que comporte ce faisceau est, de préférence, de 5 à 15 et, mieux encore, de 6 à 8.

Selon une disposition particulièrement préférée de l'invention, l'ensemble fibre(s)/manchon est, de préférence, logé dans une gorge ménagée dans la surface externe du corps de l'isolateur.

Cette gorge est typiquement une gorge hélicoïdale dont l'angle de rotation peut aller de 10 à 80° mais est préférentiellement compris entre 25 et 55°.

Conformément à l'invention, un ensemble fibre(s)/manchon tel que précédemment défini est, de préférence, obtenu en introduisant la fibre optique ou le faisceau de fibres optiques dans une gaine rétractable qui comprend au moins une couche en un matériau (co)polymère présentant les mêmes caractéristiques de résistance aux acides et, accessoirement, de résistance à la perméation aux liquides et aux gaz que celles souhaitées pour le manchon, et en induisant la rétraction de cette gaine sur ladite fibre ou ledit faisceau de fibres.

Aussi, l'invention a-t-elle également pour objet un procédé de fabrication d'un ensemble fibre(s)/manchon tel que précédemment défini, qui comprend :
- l'introduction de la fibre optique ou du faisceau de fibres optiques dans une gaine rétractable comprenant au moins une couche en un matériau (co)polymère présentant une résistance aux acides telle que précédemment définie ; et
- le traitement de cette gaine pour obtenir sa rétraction sur la fibre optique ou le faisceau de fibres optiques et ainsi sa transformation en un manchon dont la surface interne épouse la surface externe de ladite fibre ou dudit faisceau de fibres.

Comme précédemment, le matériau (co)polymère résistant aux acides est, de préférence, également résistant à la perméation des liquides et des gaz, cette résistance à la perméation étant telle que précédemment définie.

Selon encore une autre disposition préférée de l'invention, la gaine rétractable est une gaine thermorétractable, c'est-à-dire rétractable sous l'effet d'un traitement par la chaleur.

Dans ce cas, la gaine est, de préférence, choisie parmi les gaines qui présentent une couche en une polyoléfine (réticulée ou non), en un polyisobutylène ou en un (co)polymère fluoré thermoplastique ou élastomère (modifié ou non) du type PTFE, PVDF ou FEP, les gaines ayant une couche en un (co)polymère fluoré étant, particulièrement, préférées.

Conformément à l'invention, il est possible d'introduire la fibre optique ou le faisceau de fibres optiques dans la gaine rétractable après avoir enduit la surface externe de cette fibre ou des fibres de ce faisceau d'une couche de colle de sorte que cette colle puisse former, après rétractation de la gaine, un joint adhésif entre la surface externe de la fibre ou du faisceau de fibres et la surface interne du manchon résultant de cette rétraction.

En variante, il est également possible d'utiliser une gaine rétractable dont la surface interne est préenduite d'une colle.

Toutefois, la façon de procéder préférée de l'invention consiste à utiliser une gaine thermorétractable qui comprend deux couches solidaires l'une de l'autre, une couche externe qui est constituée par le matériau (co)polymère résistant aux acides, et une couche interne en un matériau (co)polymère thermofusible de sorte que ce dernier puisse former, par fusion lors du traitement par la chaleur appliqué à la gaine pour obtenir sa rétraction, puis solidification après retour à la température ambiante, un joint adhésif entre ladite couche externe et la fibre optique ou le faisceau de fibres optiques.

Dans ce cas, on préfère tout spécialement que le matériau (co)polymère thermofusible puisse également former un joint résistant à la perméation des liquides et des gaz. La couche interne de la gaine thermorétractable est donc préférentiellement en un matériau (co)polymère thermofusible présentant une résistance à la perméation des liquides et des gaz telle que précédemment définie.

Auquel cas, cette couche interne est, de préférence, en une polyoléfine ou en un (co)polymère fluoré thermoplastique, avantageusement un copolymère-d'éthylène et de propylène fluoré.

Des gaines thermorétractables susceptibles de convenir à l'invention sont par exemple :
▪ les gaines en polyoléfine irradiée à taux de rétreint diamétral de 3:1 et à température de rétreint de 100°C telles que commercialisées par la société GREMCO sous la dénomination Gremtube^{®} G61 (3X) ;
▪ les gaines à couche externe en polyoléfine irradiée et à couche interne en un adhésif à base de polyamide modifié, à taux de rétreint diamétral de 3:1 et à température de rétreint de 115°C, telles que commercialisées par la société GREMCO sous la dénomination Sumitube^{®} W3C ;
▪ les gaines en PTFE à taux de rétreint diamétral de 2:1 ou de 4:1 et à température de rétreint de 325 à 340°C telles que commercialisées par la société CABLEORGANIZER sous les références HSPTFE ;
▪ les gaines en FEP à taux de rétreint diamétral de 1,3:1 à 1,6:1 et à température de rétreint de 190 à 210°C telles que commercialisées par la société CABLEORGANIZER sous les références HSFEP ;
▪ les gaines en PVDF à taux de rétreint diamétral de 2:1 et à température de rétreint allant de 125°C pour les versions flexibles à 150°C pour les versions rigides telles que commercialisées par la société CABLEORGANIZER sous les références HSKY2 et HSPVDF2; et
▪ les gaines à couche externe en PTFE modifié et à couche interne en FEP, à taux de rétreint diamétral de 2:1 et à température de rétreint de 200 à 230°C, telles que celles commercialisées par la société GREMCO sous la dénomination Gremtube^{®} TEF-FEP.

Parmi celles-ci, on préfère les gaines dont la couche externe est en un PTFE et dont la couche interne est en un copolymère d'éthylène et de propylène fluoré.

Lors du choix de la gaine, on veillera à ce que le diamètre présenté par cette gaine soit suffisamment important pour qu'il soit possible d'y introduire sans difficulté la fibre optique ou le faisceau de fibres optiques mais pas trop élevé non plus pour que sa rétraction puisse conduire, compte tenu de son taux de rétreint diamétral, à un manchon dont la surface interne épouse la surface externe de ladite fibre ou dudit faisceau de fibres.

On veillera également à ce que l'épaisseur de la gaine soit telle que la rétraction de cette gaine puisse conduire, compte tenu de son taux de rétreint, à un manchon dont l'épaisseur est, de préférence, de 0,1 à 1,2 mm, avantageusement de 0,5 à 1 mm et, mieux encore, de 0,6 à 0,8 mm. Ainsi, par exemple, pour obtenir un manchon de 0,5 mm, on choisira une gaine de 0,25 mm d'épaisseur si le taux de rétreint de cette gaine est de 2:1.

Enfin, si la graine est thermorétractable, on veillera à ce que sa température de rétreint soit inférieure à la température de fusion du « *coating* » de la fibre optique ou des fibres optiques ou d'un éventuel surgainage que comportent cette fibre ou ces fibres afin de ne pas altérer ce « *coating* » ou ce surgainage.

Est encore décrite ici l'utilisation d'une gaine rétractable qui comprend au moins une couche en un matériau présentant une résistance aux acides telle que la perte de masse de ce matériau est inférieure à 0,1% lorsqu'il est soumis à un test de résistance à l'acide nitrique 1 M dans les conditions de la norme ASTM D 543-87, pour réaliser un manchon (6) destiné à protéger une fibre optique ou un faisceau de fibres optiques contre les attaques acides dans un isolateur électrique, ladite utilisation comprenant .
- l'introduction de la fibre optique ou du faisceau de fibres optiques dans la gaine ; et
- le traitement de cette gaine pour obtenir sa rétraction sur la fibre optique ou le faisceau de fibres optiques de sorte que la surface interne du manchon formé par la rétraction de la gaine épouse la surface externe de ladite fibre ou dudit faisceau de fibres.

Est, en outre, décrit ici un ensemble fibre(s)/manchon particulièrement préféré, qui comprend une fibre optique ou un faisceau de fibres optiques accolées les unes aux autres, et un manchon dans lequel est logé cette fibre ou ce faisceau de fibres, et dans lequel :
- la surface interne du manchon épouse la surface externe de ladite fibre ou dudit faisceau de fibres, et
- le manchon comprend deux couches solidaires l'une de l'autre, une couche externe qui est constituée en un matériau (co)polymère présentant une résistance aux acides telle que la perte de masse de ce matériau est inférieure à 0,1% lorsqu'il est soumis à un test de résistance à l'acide nitrique 1 M dans les conditions de la norme ASTM D 543-87, et une couche interne qui forme un joint adhésif entre ladite couche externe et la fibre optique ou le faisceau de fibres optiques.

Comme précédemment, la couche interne du manchon forme préférentiellement, de plus, un joint résistant à la perméation des liquides et des gaz, cette résistance à la perméation étant telle que le temps nécessaire à de l'acide nitrique 1 M pour atteindre dans le matériau formant cette couche une vitesse de perméation de 0,1 µg/min/cm² dans les conditions définies par la norme ASTM F 379-99a est supérieure à 480 minutes.

De préférence, la couche externe du manchon est en un polytétrafluoroéthylène, tandis que sa couche interne est en un copolymère d'éthylène et de propylène fluoré.

De préférence également, l'ensemble fibre(s)/manchon comprend un faisceau de fibres optiques, auquel cas ce faisceau comprend de 5 à 15 fibres.

L'invention sera mieux comprise à la lumière des exemples qui suivent et qui se réfèrent aux figures annexées.

Il va de soi que ces exemples ne sont donnés qu'à titre d'illustrations de l'objet de l'invention et ne doivent en aucun cas être interprétés comme une limitation de cet objet.

### BRÈVE DESCRIPTION DES DESSINS

La figure 1A est une représentation schématique en coupe transversale d'une fibre optique que l'on a introduite dans une gaine thermorétractable en vue d'obtenir un premier exemple d'un ensemble fibre/manchon.
La figure 1B est une représentation schématique en coupe transversale de l'ensemble fibre/manchon obtenu après rétreint de la gaine montrée sur la figure 1A.
La figure 2A est une représentation schématique en coupe transversale de fibres optiques que l'on a introduites dans une gaine thermorétractable en vue d'obtenir un deuxième exemple d'un ensemble fibres/manchon.
La figure 2B est une représentation schématique en coupe transversale de l'ensemble fibres/manchon obtenu après rétreint de la gaine montrée sur la figure 2A.
La figure 3 est une représentation schématique en coupe longitudinale d'un exemple d'isolateur électrique conforme à l'invention.
La figure 4 est une représentation schématique d'un détail de la figure 3 illustrant une variante de réalisation de l'isolateur électrique.

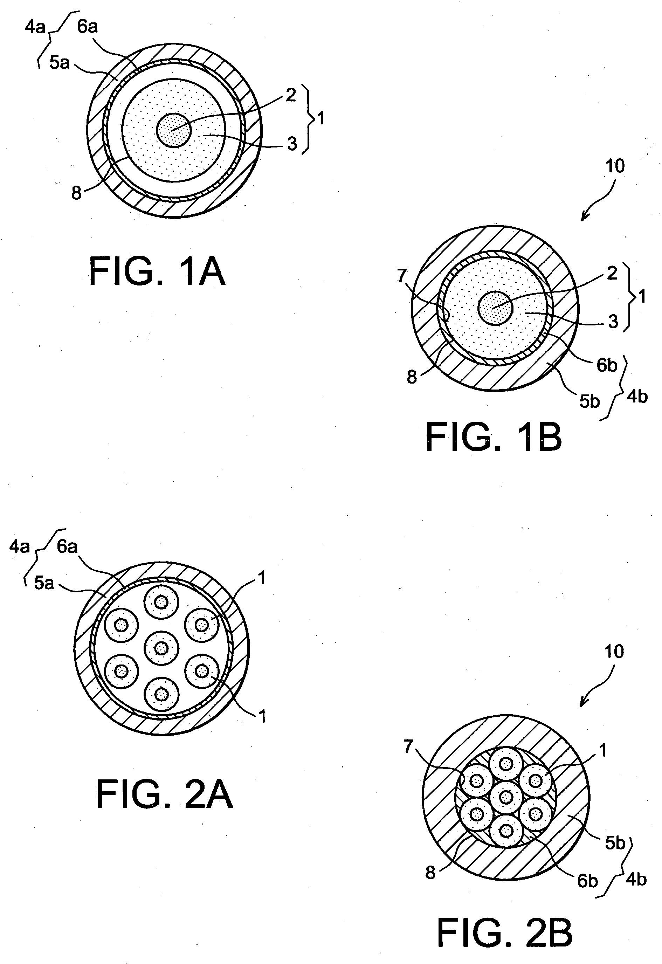

Sur les figures 1A à 4, les éléments qui sont strictement identiques d'une figure à l'autre ou qui, sans être strictement identiques, ont la même fonction portent les mêmes références.

Par ailleurs, les différents éléments représentés sur les figures 1A à 4 ne le sont pas nécessairement selon une échelle uniforme, pour rendre ces figures plus lisibles.

### EXPOSÉ DÉTAILLÉ DE MODES DE REALISATION PARTICULIERS

### Exemple 1 : Fabrication d'un premier exemple d'un ensemble fibre(s)/manchon

Dans cet exemple, on réalise un ensemble fibre(s)/manchon en utilisant :
- d'une part, une fibre optique multimodes commercialisée par la société SEDI Fibres Optiques sous la référence HCP-M0200T, et
- d'autre part, une gaine thermorétractable commercialisée par la société GREMCO sous la référence Gremtube^{®} TEF-FEP-S 060.

Comme visible sur la figure 1A, qui représente schématiquement, en coupe transversale, la fibre optique, référencée 1, déjà introduite dans la gaine thermorêtractable, référencée 4a, mais avant que cette gaine ne soit rétractée, la fibre optique est constituée d'un coeur 2 en silice de 200 *µ*m de diamètre et d'un revêtement 3 composé, de l'intérieur vers l'extérieur, d'un « *cladding* » en polymère dur de 230 µm de diamètre, d'un « *coating* » de protection mécanique en Tefzel^{®} (tétrafluoroéthylène d'éthylène modifié de la société DUPONT) de 500 µm de diamètre et d'un surgainage en Hytrel^{®} (élastomère thermoplastique polyester de la société DUPONT) de 900 µm de diamètre.

Le diamètre externe de la fibre optique 1 est donc de 900 µm.

La gaine thermorétractable 4a est, elle, constituée de deux couches de matériaux différents : une couche externe 5a en polytétrafluoroéthylène (PTFE) modifié et une couche interne 6a en éthylène-propylène fluoré (FEP). Son diamètre interne minimum est de 1,52 mm et sa température minimale de rétreint est de 200°C.

Parmi les matériaux qui entrent dans la constitution de la fibre optique 1, l'Hytrel^{®} est celui qui présente la température de fusion la plus basse, à savoir 225°C, ce qui signifie que la température susceptible d'être utilisée pour obtenir le rétreint de la gaine 4a ne doit en aucun cas atteindre 225°C sous peine d'altérer le surgainage de cette fibre optique.

En l'espèce, on choisit d'opérer ce rétreint à 200°C.

Pour ce faire, après avoir introduit la fibre optique 1 dans la gaine 4a, on commence par chauffer cette gaine à l'une de ses extrémités au moyen d'un pistolet à air chaud réglé à 200°C de manière à initier le processus de rétreint au niveau de cette extrémité.

Puis, on déplace lentement le pistolet à air chaud en direction de l'autre extrémité de la gaine 4a tout en opérant un mouvement continu de rotation de l'ensemble formé par la fibre optique et cette gaine afin d'obtenir un rétreint homogène sur toute la longueur et sur toute sa circonférence de la gaine 4a et d'éviter ainsi que de l'air ne soit piégé ou que des cavités ne se créent à l'interface entre ladite fibre optique et ladite gaine.

Pendant cette opération, la couche externe 5a de la gaine 4a se rétrécit fortement sur la fibre optique 1 tandis que sa couche interne 6a fond et forme, entre ladite couche externe et la fibre optique, un joint qui, après retour à la température ambiante, sera adhésif et résistant à la perméation des liquides et des gaz.

On obtient ainsi l'ensemble 10 représenté schématiquement en coupe transversale sur la figure 1B.

Cet ensemble est constitué d'une fibre optique 1 qui incluse dans un manchon 4b, lequel présente une épaisseur de l'ordre de 0,7 mm, est constitué de deux couches solidaires l'une de l'autre : une couche externe 5b en PTFE et une couche interne 6b en FEP, et a sa surface interne 7 qui épouse la surface externe 8 de la fibre optique au point de se confondre avec elle.

Ce manchon est apte à assurer à ladite fibre optique une protection à la fois contre les attaques acides et, plus spécialement, les attaques par l'acide nitrique, et contre l'humidité.

### Exemple 2 : Fabrication d'un deuxième exemple d'un ensemble fibre(s)/manchon

Dans cet exemple, on réalise un ensemble fibre(s)/manchon en utilisant :
- d'une part, sept fibres optiques multimodes identiques à celles utilisées dans l'exemple 1 ci-avant, et
- d'autre part, une gaine thermorétractable commercialisée par la société GREMCO sous la référence Gremtube^{®} TEF-FEP-S 190.

Cette gaine a la même constitution que celle utilisée dans l'exemple 1 mais son diamètre interne minimum est de 4,83 mm.

Comme visible sur la figure 2A, on commence par introduire les fibres optiques 1 dans la gaine thermorétractable 4a et on chauffe cette dernière au moyen d'un pistolet à air chaud réglé à 200°C en procédant exactement de la même manière que dans l'exemple 1 ci-avant.

Là également, sous l'effet de la chaleur, la couche externe 5a de la gaine 4a se rétrécit fortement sur les fibres optiques 1, ce qui a pour effet de les réunir en un faisceau compact, tandis que sa couche interne 6a fond et se disperse en partie dans les interstices situés entre ces fibres, chassant ainsi l'air qui s'y trouve et formant un joint non seulement entre la couche externe en PTFE et la surface externe du faisceau de fibres ainsi constitué mais aussi entre les fibres constituant ce faisceau. Après retour à la température ambiante, ce joint sera adhésif et résistant à la perméation des liquides et les gaz.

On obtient ainsi l'ensemble 10 représenté schématiquement en coupe transversale sur la figure 2B.

Cet ensemble est constitué d'un faisceau de sept fibres optiques 1 accolées les unes aux autres, qui est inclus dans un manchon 4b, lequel présente une épaisseur de l'ordre de 0,89 mm, est constitué de deux couches solidaires l'une de l'autre : une couche externe 5b en PTFE et une couche interne 6b en FEP, et a sa surface interne 7 qui épouse la surface externe 8 dudit faisceau au point de se confondre avec elle.

Ce manchon est apte à assurer auxdites fibres une protection à la fois contre les attaques acides et, notamment, les attaques par l'acide nitrique, et contre l'humidité.

De plus, dans cet ensemble, il n'existe aucun espace libre entre les fibres optiques 1, ces espaces ayant été comblés par la fusion de la couche interne en FEP de la gaine thermorétractable 4.

### Exemple 3 : Isolateur électrique conforme à l'invention

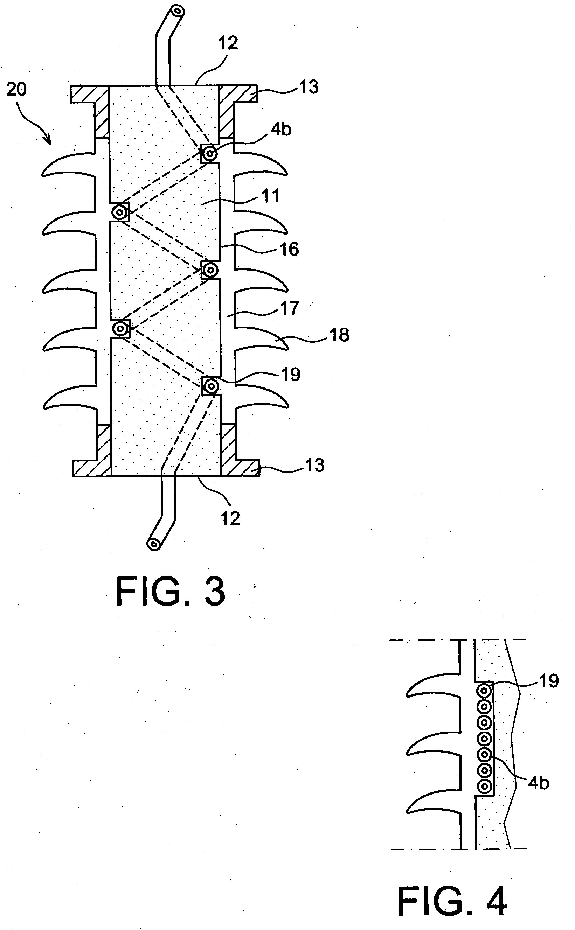

On se réfère à présent à la figure 3 qui représente schématiquement, vu en coupe longitudinale, un exemple d'isolateur électrique conforme à l'invention.

Comme visible sur cette figure, cet isolateur, référencé 20, comprend, d'une part, un corps d'isolateur 11 qui se présente sous la forme d'un cylindre, typiquement à section droite circulaire.

Sur la figure 3, ce cylindre est plein. Toutefois, il pourrait tout aussi bien être creux (si, par exemple, l'isolateur est destiné à être utilisé dans un transformateur à isolation gazeuse) comme cela est bien connu en soi.

Le corps d'isolateur 11 est, de préférence, en un matériau composite comprenant une résine durcie, de préférence une résine époxyde, qui est renforcée par des fibres électro-isolantes, lesquelles peuvent être de nature minérale (fibres de quartz, fibres de verre, fibres de carbure de silicium, ......) ou organique (fibres aramides, fibres de polyester, fibres de polybenzo-bisoxazole, ......).

Chacune de ses extrémités 12 est terminée par un embout 13 dans lequel elle est emboitée et qui, lui, est de préférence métallique.

L'isolateur 20 comprend, d'autre part, un revêtement 15 qui recouvre toute la partie de la surface externe 16 du corps d'isolateur 11 qui est située entre les deux embouts 13.

Ce revêtement est constitué d'un matériau isolant, typiquement un caoutchouc silicone du type caoutchouc silicone RTV (pour « Room Temperature Vulcanization »), HTV (pour « High Temperature Vulcanization ») or LSR (pour « Liquid Silicone Rubber ») monocomposant ou bicomposant, préférentiellement bicomposant et comporte sur sa surface externe une pluralité d'ailettes 18 destinées à augmenter les lignes de fuite externe.

L'isolateur 20 comprend, en outre, un ensemble fibre(s)/manchon 10,
qui chemine d'une extrémité à l'autre du corps d'isolateur 11, en étant logé dans une gorge hélicoïdale 19 ménagée dans la surface externe 16 de ce corps et dont l'angle de rotation est avantageusement de 25 à 55°, mais qui se prolonge hors de l'isolateur 20, cet ensemble étant, par exemple, relié à l'une de ses extrémités à un capteur optique porté à la haute tension (non représenté sur la figure 3) et, au niveau de l'autre de ses extrémités, à un système dé mesure ou d'analyse du signal porté à un potentiel différent pouvant être le potentiel de la terre (non représenté sur la figure 3).

La sortie de l'ensemble fibre(s)/manchon 10 de l'isolateur 20 est assurée par deux conduits (non représentés sur la figure 3) qui traversent chacun l'un des embouts 13.

L'ensemble fibre(s)/manchon 10 représenté sur la figure 3 est un ensemble à une seule fibre optique du type de celui montré sur la figure 1B. Toutefois, il pourrait tout aussi bien s'agir d'un ensemble à plusieurs fibres optiques semblable à celui montré sur la figure 2B.

Le revêtement isolant 15 est, de préférence, réalisé par surmoulage, c'est-à-dire en introduisant le corps d'isolateur 11 dans un moule à deux demi-coquilles, après avoir placé les embouts 13 sur les extrémités 12 puis l'ensemble fibre(s)/manchon 10 dans la gorge 19, et en injectant dans ce moule un matériau liquide que l'on fait ensuite durcir par polymérisation.

Aussi, afin d'éviter que de l'air ne soit piégé dans la gorge 19 au cours de cette opération de surmoulage, les dimensions de cette gorge, c'est-à-dire sa profondeur et sa largeur, sont choisies de sorte que le matériau liquide utilisé pour réaliser le revêtement isolant 15 puisse se répandre autour de l'ensemble fibre(s)/manchon 10 et combler la totalité de l'espace non occupé par cet ensemble dans ladite gorge. L'ensemble fibre(s)/manchon 10 se retrouve ainsi noyé dans le matériau formant le revêtement isolant 15.

Un isolateur électrique tel que représenté sur la figure 3 peut être réalisé par un procédé comprenant :
1) la réalisation du corps d'isolateur 11, par exemple par la technique dite par enroulement filamentaire ;
2) la réalisation, par exemple par usinage, de la gorge hélicoïdale 19 dans la surface externe du corps d'isolateur ainsi obtenu ;
3) la mise en mise en place des deux embouts 13 sur les extrémités 12 du corps d'isolateur ;
4) la mise en place de l'ensemble fibre(s)/manchon 10 (que l'on aura préalablement fabriqué) dans la gorge 19 et son maintien dans cette gorge au moyen d'un adhésif (ruban adhésif double face, colle, etc), après un éventuel traitement de la surface externe du manchon propre à favoriser l'adhésion ultérieure du matériau isolant destiné à constituer le revêtement isolant 15 ;
5) le surmoulage de ce revêtement isolant 15 par injection du matériau isolant sous forme liquide après avoir placé le corps d'isolateur 11 dans un moule à deux demi-coquilles, puis polymérisation dudit matériau ; et
6) la réalisation d'une étanchéité au niveau du conduit de sortie de l'ensemble fibre(s)/ manchon 10 que comporte chacun des embouts 13 par injection dans ce conduit d'un matériau d'étanchéité, par exemple un gel de silicone polymérisant à température ambiante.

L'invention ne se limite nullement aux modes de réalisation qui viennent d'être décrits.

Ainsi, par exemple, bien que l'on préfère loger l'ensemble fibre(s)/manchon 10 dans une gorge située dans la surface externe du corps d'isolateur car cette disposition permet de diminuer l'épaisseur du revêtement isolant 15 et, par voie de conséquence, de réduire les coûts de fabrication de ce revêtement, il est tout à fait possible de ne pas prévoir de gorge et de disposer ledit ensemble sur la surface externe du corps d'isolateur de sorte à ce qu'il forme une hélice autour de cette surface.

Par ailleurs, contrairement à ce qui est illustré sur la figure 3, l'isolateur 20 peut comprendre plusieurs ensembles fibre(s)/manchon 10, notamment dans le cas où l'on souhaite utiliser des ensembles à une seule fibre optique.

Ainsi, par exemple, comme visible sur la figure 4, il est tout à fait possible de prévoir une gorge 19 plus large que celle montrée sur la figure 3 et de disposer dans cette gorge une rangée de 5 à 10 ensembles fibre(s)/manchon 10 alignés.

### REFERENCE CITEE

[1] Demande de brevet US publiée sous le n° 2006/0153509

## Revendications

1. Isolateur électrique (20), qui comprend :
- un corps d'isolateur (11) comportant une surface externe (16) ;
- un revêtement (15) en un matériau isolant qui recouvre la surface externe du corps d'isolateur ; et
- au moins un ensemble (10) qui chemine le long du corps d'isolateur en étant noyé dans le revêtement en matériau isolant, qui comprend une fibre optique (1) ou un faisceau de fibres optiques (1) accolées les unes aux autres, et un manchon (4b) dans lequel est logé cette fibre ou ce faisceau de fibres, et dans lequel :
• le manchon comprend au moins une couche en un matériau (co)polymère présentant une résistance aux acides telle que la perte de masse de ce matériau est inférieure à 0,1% lorsqu'il est soumis à un test de résistance à l'acide nitrique 1 M dans les conditions de la norme ASTM D 543-87, et
• la surface interne (7) du manchon épouse la surface externe (8) de ladite fibre ou dudit faisceau de fibres.

2. Isolateur électrique (20) selon la revendication 1, dans lequel le matériau (co)polymère résistant aux acides présente de plus une résistance à la perméation des liquides et des gaz telle que le temps nécessaire à de l'acide nitrique 1 M pour atteindre dans ce matériau une vitesse de perméation de 0,1 µg/min/cm² dans les conditions définies par la norme ASTM F 379-99a est supérieur à 480 minutes.

3. Isolateur électrique (20) selon la revendication 1 ou la revendication 2, dans lequel le matériau (co)polymère résistant aux acides est choisi parmi les polyoléfines, les polyisobutylènes et les (co)polymères fluorés thermoplastiques.

4. Isolateur électrique (20) selon l'une quelconque des revendications 1 à 3, dans lequel le manchon présente une épaisseur de 0,1 mm à 1,2 mm.

5. Isolateur électrique (20) selon l'une quelconque des revendications 1 à 4, dans lequel le manchon comprend deux couches solidaires (5b, 6b) l'une de l'autre, une couche externe, qui est constituée par le matériau (co)polymère résistant aux acides, et une couche interne qui forme un joint adhésif entre ladite couche externe et la fibre optique ou le faisceau de fibres optiques.

6. Isolateur électrique (20) selon la revendication 5, dans lequel la couche interne du manchon forme de plus un joint résistant à la perméation des liquides et des gaz, cette résistance à la perméation étant telle que le temps nécessaire à de l'acide nitrique 1 M pour atteindre dans le matériau
formant cette couche une vitesse de perméation de 0,1 µg/min/cm² dans les conditions définies par la norme ASTM F 379-99a est supérieure à 480 minutes.

7. Isolateur électrique (20) selon la revendication 5 ou la revendication 6, dans lequel la couche interne du manchon est en une polyoléfine ou en un (co)polymère fluoré thermoplastique.

8. Isolateur électrique (20) selon l'une quelconque des revendications 5 à 7, dans lequel la couche externe du manchon est en un polytétrafluoroéthylène, tandis que sa couche interne est en un copolymère d'éthylène et de propylène fluoré.

9. Isolateur électrique (20) selon l'une quelconque des revendications 1 à 8, dans lequel le faisceau de fibres optiques comprend de 5 à 15 fibres.

10. Isolateur électrique (20) selon l'une quelconque des revendications 1 à 9, dans lequel ledit ensemble est logé dans une gorge (19) ménagée dans la surface externe (16) du corps d'isolateur.

11. Isolateur électrique (20) selon la revendication 10, dans lequel la gorge est une gorge hélicoïdale.

12. Procédé de fabrication d'un ensemble (10) tel que défini dans la revendication 1, qui comprend :
- l'introduction de la fibre optique (1) ou du faisceau de fibres optiques (1) dans une gaine rétractable (4a) comprenant au moins une couche en un matériau (co)polymère présentant une résistance aux acides telle que la perte de masse de ce matériau est inférieure à 0,1% lorsqu'il est soumis à un test de résistance à l'acide nitrique 1 M dans les conditions de la norme ASTM D 543-87 ; et
- le traitement de cette gaine pour obtenir sa rétraction sur la fibre optique ou le faisceau de fibres optiques et ainsi sa transformation en un manchon (4b) dont la surface interne (7) épouse la surface externe (8) de ladite fibre ou dudit faisceau de fibres.

13. Procédé selon la revendication 12, dans lequel le matériau (co)polymère résistant aux acides présente de plus une résistance à la perméation des liquides et des gaz telle que le temps nécessaire à de l'acide nitrique 1 M pour atteindre dans ce matériau une vitesse de perméation de 0,1 *µ*g/min/cm² dans les conditions définies par la norme ASTM F 379-99a est supérieur à 480 minutes.

14. Procédé selon la revendication 12 ou la revendication 13, dans lequel la gaine rétractable (4a) est une gaine thermorétractable.

15. Procédé selon la revendication 14, dans lequel la gaine thermorétractable est choisie parmi les gaines qui comportent une couche en une polyoléfine, un polyisobutylène ou un (co)polymère fluoré thermoplastique.

16. Procédé selon la revendication 14 ou la revendication 15, dans lequel la gaine thermo-rétractable est choisie parmi les gaines qui comprennent deux couches (5a, 5b) solidaires l'une de l'autre, une couche externe, qui est constituée par le matériau (co)polymère résistant aux acides, et une couche interne en un matériau polymère thermofusible.

17. Procédé selon la revendication 16, dans lequel le matériau (co)polymère thermofusible est résistant à la perméation des liquides et des gaz, cette résistance à la perméation étant telle que le temps nécessaire à de l'acide nitrique 1 M pour atteindre dans le matériau formant cette couche une vitesse de perméation de 0,1 *µ*g/min/cm² dans les conditions définies par la norme ASTM F 379-99a est supérieure à 480 minutes.

18. Procédé selon la revendication 16 ou la revendication 17, dans lequel le matériau polymère thermofusible est une polyoléfine ou en un (co)polymère fluoré thermoplastique.

19. Procédé selon l'une quelconque des revendications 16 à 18, dans lequel la couche externe de la gaine thermorétractable est en un polytétrafluoroéthylène, tandis que sa couche interne est en un copolymère d'éthylène et de propylène fluoré.

## Patentansprüche

1. Elektrischer Isolator (20), enthaltend:
- einen Isolatorkörper (11) mit einer Außenfläche (16);
- eine Beschichtung (15) aus Isoliermaterial, die die Außenfläche des Isolatorkörpers bedeckt;
- zumindest eine Anordnung (10), welche entlang des Isolatorkörpers führt und dabei in der Beschichtung aus Isoliermaterial eingebettet ist und eine Glasfaser (1) bzw. ein Bündel aus Glasfasern (1), die aneinander gefügt sind, und eine Hülse (4b) enthält, in welcher diese Glasfaser bzw. dieses Glasfaserbündel aufgenommen ist, wobei
• die Hülse zumindest eine Schicht aus einem (Co)polymermaterial enthält, das eine solche Säurebeständigkeit hat, dass der Masseverlust dieses Materials geringer als 0,1 % ist, wenn es einem Salpetersäuretest 1 M unter den Bedingungen der Norm ASTM D 543-87 unterzogen wird, und
• die Innenfläche (7) der Hülse sich an die Außenfläche (8) der Glasfaser bzw. des Glasfaserbündels anschmiegt.

2. Elektrischer Isolator (20) nach Anspruch 1, wobei das säurebeständige (Co)polymermaterial ferner eine solche Permeationsbeständigkeit gegen die Permeation von Flüssigkeiten und Gasen aufweist, dass die Zeit, die die Salpetersäure 1 M braucht, um in diesem Material eine Permeationsgeschwindigkeit von 0,1 µg/min/cm² unter den in der Norm ASTM F 379-99a definierten Bedingungen zu erreichen, über 480 Minuten beträgt.

3. Elektrischer Isolator (20) nach Anspruch 1 oder Anspruch 2, wobei das säurebeständige (Co)polymermaterial ausgewählt ist aus Polyolefinen, Polyisobutylenen und thermoplastischen, fluorhaltigen (Co)polymeren.

4. Elektrischer Isolator (20) nach einem der Ansprüche 1 bis 3, wobei die Hülse eine Dicke von 0,1 mm bis 1,2 mm aufweist.

5. Elektrischer Isolator (20) nach einem der Ansprüche 1 bis 4, wobei die Hülse zwei fest miteinander verbundene Schichten (5b, 6b) enthält, nämlich eine Außenschicht, die aus dem säurebeständigen (Co)polymermaterial besteht, und eine Innenschicht, welche eine Haftverbindungsstelle zwischen der Außenschicht und der Glasfaser bzw. dem Glasfaserbündel bildet.

6. Elektrischer Isolator (20) nach Anspruch 5, wobei die Innenschicht der Hülse ferner eine gegen die Permeation von Flüssigkeiten und Gasen beständige Verbindungsstelle bildet, wobei diese Permeationsbeständigkeit derart ist, das die Zeit, die die Salpetersäure 1 M braucht, um in dem diese Schicht bildenden Material eine Permeationsgeschwindigkeit von 0,1 µg/min/cm² unter den in der Norm ASTM F 379-99a definierten Bedingungen zu erreichen, über 480 Minuten beträgt.

7. Elektrischer Isolator (20) nach Anspruch 5 oder Anspruch 6, wobei die Innenschicht des Hülse aus Polyolefin oder thermoplastischem, fluorhaltigen (Co)polymer besteht.

8. Elektrischer Isolator (20) nach einem der Ansprüche 5 bis 7, wobei die Außenschicht der Hülse aus einem Polytetrafluorethylen besteht, während ihre Innenschicht aus einem fluorhaltigen Copolymer aus Ethylen und Propylen besteht.

9. Elektrischer Isolator (20) nach einem der Ansprüche 1 bis 8, wobei das Glasfaserbündel 5 bis 15 Fasern enthält.

10. Elektrischer Isolator (20) nach einem der Ansprüche 1 bis 9, wobei die Anordnung in einer Nut (19) aufgenommen ist, die in der Außenfläche (16) des Isolatorkörpers ausgeführt ist.

11. Elektrischer Isolator (20) nach Anspruch 10, wobei die Nut eine wendelförmige Nut ist.

12. Verfahren zum Herstellen einer Anordnung (10) wie in Anspruch 1 definiert, das umfasst:
- Einführen der Glasfaser (1) bzw. des Glasfaserbündels (1) in eine schrumpfbare Hülle (4a), die zumindest eine Schicht aus einem (Co)polymermaterial enthält, das eine solche Säurebeständigkeit hat, dass der Masseverlust dieses Materials geringer als 0,1 % ist, wenn es einem Salpetersäuretest 1 M unter den Bedingungen der Norm ASTM D 543-87 unterzogen wird, und
- Behandeln dieser Hülle, um deren Schrumpfung auf der Glasfaser bzw. dem Glasfaserbündel sowie deren Umwandlung in eine Hülse (4b) zu erreichen, deren Innenfläche (7) sich an die Außenfläche (8) der Glasfaser bzw. des Glasfaserbündels anschmiegt

13. Verfahren nach Anspruch 12, wobei das säurebeständige (Co)polymermaterial ferner eine solche Permeationsbeständigkeit gegen die Permeation von Flüssigkeiten und Gasen aufweist, dass die Zeit, die die Salpetersäure 1 M braucht, um in diesem Material eine Permeationsgeschwindigkeit von 0,1 µg/min/cm² unter den in der Norm ASTM F 379-99a definierten Bedingungen zu erreichen, über 480 Minuten beträgt.

14. Verfahren nach Anspruch 12 oder Anspruch 13, wobei die schrumpfbare Hülle (4a) eine warmschrumpfbare Hülle ist.

15. Verfahren nach Anspruch 14, wobei die warmschrumpfbare Hülle ausgewählt ist aus Hüllen, die eine Schicht aus einem Polyolefin, einem Polyisobutylen oder einem thermoplastischen, fluorhaltigen (Co)polymer enthält.

16. Verfahren nach Anspruch 14 oder Anspruch 15, wobei die warmschrumpfbare Hülle ausgewählt ist aus Hüllen, die zwei fest miteinander verbundene Schichten (5a, 5b) enthalten, nämlich eine Außenschicht, die aus dem säurebeständigen (Co)polymermaterial besteht, und eine Innenschicht aus einem heißschmelzbaren Polymermaterial.

17. Verfahren nach Anspruch 16, wobei das heißschmelzbare (Co)polymermaterial gegen die Permeation von Flüssigkeiten und Gasen beständig ist, wobei diese Permeationsbeständigkeit derart ist, dass die Zeit, die die Salpetersäure 1 M braucht, um in dem diese Schicht bildenden Material eine Permeationsgeschwindigkeit von 0,1 µg/min/cm² unter den in der Norm ASTM F 379-99a definierten Bedingungen zu erreichen, über 480 Minuten beträgt.

18. Verfahren nach Anspruch 16 oder Anspruch 17, wobei das heißschmelzbare Polymermaterial ein Polyolefin oder ein thermoplastisches, fluorhaltiges (Co)polymer ist.

19. Verfahren nach einem der Ansprüche 16 bis 18, wobei die Außenschicht der heißschrumpfbaren Hülle aus einem Polytetrafluorethylen besteht, während ihre Innenschicht aus einem fluorhaltigen Copolymer aus Ethylen und Propylen besteht.

## Claims

1. An insulator (20), which comprises:
- an insulator body (11) having an outer surface (16);
- a jacket (15) of an insulating material, covering the outer surface of the insulator body; and
- at least one cable (10), which extends along the insulator body while being encased within the jacket of insulating material, which comprises an optical fiber (1) or a bundle of optical fibers (1) in physical contact with one another, and a sleeve (4b) in which said fiber or bundle of fibers is contained, and in which:
• the sleeve comprises at least one layer of a (co)polymer material with a resistance to acids being such that the loss of mass from this material is less than 0.1% when it is subjected to a test of resistance to 1 M nitric acid under the conditions laid down in ASTM Standard D 543-87; and
• the inner surface (7) of the sleeve is in engagement with the outer surface (8) of said fiber or said bundle of fibers.

2. An insulator (20) according to claim 1, wherein the acid-resistant (co)polymer material further has a resistance to permeation by liquids and gases that is such that the time required for 1 M nitric acid to reach in this material a rate of permeation of 0.1 µg/min/cm², under the conditions defined in ASTM Standard F 379-99a, is greater than 480 minutes.

3. An insulator (20) according to claim 1 or claim 2, wherein the acid-resistant (co)polymer material is selected from the group that consists of polyolefins, polyisobutylenes, and thermoplastic fluorinated (co)polymers.

4. An insulator (20) according to any one of claims 1 to 3, wherein the sleeve has a thickness in the range from 0.1 mm to 1.2 mm.

5. An insulator (20) according to any one of claims 1 to 4, wherein the sleeve comprises two layers (5b, 6b) joined to each other, namely an outer layer that consists of the acid-resistant (co)polymer material, and an inner layer that defines an adhesive bond between said outer layer and the optical fiber or bundle of optical fibers.

6. An insulator (20) according to claim 5, wherein the inner layer of the sleeve further defines an interface resistant to permeation by liquids and gases, said permeation resistance being such the time required for the 1 M nitric acid to reach, in the material of said layer, a rate of permeation of 0.1 µg/min/cm² under the conditions defined by the ASTM Standard F 379-99a is greater than 480 minutes.

7. An insulator (20) according to claim 5 or claim 6, wherein the inner layer of the sleeve is made of a polyolefin or a fluorinated thermoplastic (co)polymer.

8. An insulator (20) according to any one of claims 5 to 7, wherein the outer layer of the sleeve is made of a polytetrafluorethylene, while its inner layer is made of a copolymer of ethylene and fluorinated propylene.

9. An insulator (20) according to any one of claims 1 to 8, wherein the bundle of optical fibers comprises 5 to 15 fibers.

10. An insulator (20) according to any one of claims 1 to 9, wherein said cable is contained in a groove (19) formed in the outer surface (16) of the insulator body.

11. An insulator (20) according to claim 10, wherein the groove is a helical groove.

12. A method of making a cable (10) according to claim 1, comprising the steps of:
• introducing the optical fiber (1) or bundle of optical fibers (1) into a shrinkable sheath (4a) that comprises at least one layer of an acid-resistant (co)polymer material with a resistance to acids being such that the loss of mass from this material is less than 0.1% when the material is subjected to a test of resistance to 1 M nitric acid under the conditions laid down in ASTM Standard D 543-87; and
• applying treatment to this sheath to cause the sheath to shrink on to the optical fiber or bundle of optical fibers, whereby to convert the sheath into a sleeve (4b) the inner surface (7) of which is in engagement with the outer surface (8) of said fiber or said bundle of fibers.

13. A method according to claim 12, wherein the acid-resistant (co)polymer material further has a resistance to permeation by liquids and gases that is such that the time required for 1 M nitric acid to reach in said material a rate of permeation of 0.1 µg/min/cm², under the conditions defined in ASTM Standard F 379-99a, is greater than 480 minutes.

14. A method according to claim 12 or claim 13, wherein the shrinkable sheath (4a) is a heat-shrinkable sheath.

15. A method according to claim 14, wherein the heat-shrinkable sheath is selected from the group that consists of sheaths having a layer of a polyolefin, or a polyisobutylene, or a thermoplastic fluorinated (co)polymer.

16. A method according to claim 14 or claim 15, wherein the heat-shrinkable sheath is selected from the group that consists of sheaths that comprises two layers (5b, 6b) joined to each other, namely an outer layer that consists of the acid-resistant (co)polymer material, and an inner layer made of a thermoplastic polymeric material.

17. A method according to claim 16, wherein the thermoplastic (co)polymeric material is resistant to permeation by liquids and gases, said permeation resistance being such the time required for the 1 M nitric acid to reach, in the material of said layer, a rate of permeation of 0.1 µg/min/cm² under the conditions defined by the ASTM Standard F 379-99a is greater than 480 minutes.

18. A method according to claim 16 or claim 17, wherein the thermoplastic polymeric material is a polyolefin or a thermoplastic fluorinated (co)polymer.

19. A method according to any one of claims 16 to 18, wherein the outer layer of the sleeve is made of a polytetrafluorethylene, while its inner layer is made of a copolymer of ethylene and fluorinated propylene.
